# EUROPÄISCHE PATENTSCHRIFT

(11) **EP 2 002 310 B1**
(45) Veröffentlichungstag und Bekanntmachung des Hinweises auf die Patenterteilung: **01.11.2017**
(21) Anmeldenummer: 07724032.3
(22) Anmeldetag: 05.04.2007
(51) Int. Cl.: G03H 1/20, G03H 1/26, B42D 25/328

(54) **VERFAHREN ZUR HERSTELLUNG EINES MEHRSCHICHTKÖRPERS MIT VOLUMEN-HOLOGRAMM, UND SICHERHEITSELEMENT**
METHOD OF MANUFACTURING A MULTI-LAYER BODY WITH A VOLUME HOLOGRAM, AND SECURITY ELEMENT
PROCÉDÉ DE FABRICATION D'UN CORPS MULTICOUCHES AVEC HOLOGRAMME VOLUMIQUE, ET ÉLÉMENT DE SÉCURITÉ

(30) Priorität: 06.04.2006 DE 102006016139
(43) Veröffentlichungstag der Anmeldung: 17.12.2008
(73) Patentinhaber: OVD Kinegram AG, 6301 Zug (CH)
(72) Erfinder: STAUB, René, CH-6332 Hagendorn (CH); BREHM, Ludwig, 91325 Adelsdorf (DE); HANSEN, Achim, CH-6300 Zug (CH); TOMPKIN, Wayne, Robert, CH-5400 Baden (CH); SCHILLING, Andreas, CH-6332 Hagendorn (CH)
(74) Vertreter: Zinsinger, Norbert
(86) Internationale Anmeldenummer: PCT/EP2007/003091
(87) Internationale Veröffentlichungsnummer: WO 2007/115785

(56) Entgegenhaltungen:
- EP-A- 1 217 469
- EP-A2- 0 401 566
- WO-A-99/38038
- WO-A1-2005/042268

## Beschreibung

Die Erfindung betrifft ein Verfahren zur Herstellung eines Mehrschichtkörpers mit einem Volumenhologramm, sowie ein Sicherheitselement mit dem besagten Mehrschichtkörper.

Hologramme sind als Sicherheitselemente zum Schutz von Sicherheitsdokumenten, wie Banknoten, Pässen, Sicherheitskarten oder dergleichen, eingesetzt, um eine hohe Fälschungssicherheit zu erreichen. Für Massenprodukte werden häufig Oberflächenhologramme eingesetzt, die zum einen keinen optimalen Bildeindruck hervorrufen und zum anderen durch Abformen des Oberflächenreliefs kopierbar sind.

Volumenhologramme, auch als Weißlichthologramme oder Reflexionshologramme bezeichnet, beruhen auf der Lichtbeugung an den sogenannten Braggschen Ebenen einer transparenten Schicht, die lokale Brechzahlunterschiede aufweist und erzeugen einen brillanten Bildeindruck. Sie sind nicht durch Abformen eines Oberflächenreliefs kopierbar.

Das gleichzeitige Einschreiben von zwei unterschiedlichen Bildinformationen in ein Volumenhologramm ruft allerdings in den Bereichen, in denen sich die beiden Bildinformationen überlagern, eine lichtschwache und/oder unscharfe Wiedergabe hervor. Das kann vermieden werden, wenn zwei separate Volumenhologramme übereinander angeordnet werden. Von Nachteil ist dabei jedoch zum einen die erhöhte Dicke - Volumenhologramme weisen in der Dicke ein Vielfaches der zum Erzeugen verwendeten Lichtwellenlänge auf - und die hohen Anforderungen an die Passergenauigkeit der Volumenhologramm-Schichten.

In EP 1 187 728 B1 wird ein Verfahren beschrieben, das vorsieht, daß ein Transmissionshologramm und ein Reflexionshologramm jeweils in einer Hologrammschicht aufgezeichnet werden und anschließend die beiden Hologrammschichten aufeinander laminiert werden.

Aus EP 1 217 469 A2 ist ein Verfahren bekannt, ein Oberflächenreliefhologramm mit einer photosensitiven Schicht zu beschichten und ein Volumenhologramm im Kontaktverfahren zu erzeugen.

EP 1 511 636 A1 beschreibt ein Verfahren, bei dem ein Volumenhologramm durch einen optischen Kopiervorgang aus einem Master mit einem Oberflächenrelief hergestellt wird, wobei das Oberflächenrelief ein Hologramm ist. Solche Volumenhologramme sind zwar fälschungssicherer als das Master-Hologramm, doch sie sind optisch nicht hochwertiger als ein Oberflächenhologramm.

Das Dokument EP 0 401 566 A2 beschreibt ein Verfahren zur Herstellung eines Reflexionshologramms, bei dem als Master ein Zylinder eingesetzt wird, welcher wenigstens teilweise reflektierend und/ oder beugend ist. Der Master kann beispielsweise ein metallisierter Film, insbesondere mit einem Reliefhologramm, sein.

Das Dokument WO 2005/042268 A1 beschreibt ein diffraktives Sicherheitselement mit einem Halbtonbild.

Das Dokument WO 99/38038 A1 beschreibt ein Flächenmuster aus mosaikartig angeordneten, mikroskopischen Reliefstrukturen, welches wenigstens in erste und zweite Teilflächen aufgeteilt ist, die miteinander verschachtelt sind und jeweils asymmetrische Beugungsgitter aufweisen. Dieses Flächenmuster soll auch mit holographischen Kopierverfahren nur schwer zu fälschen sein. Der Erfindung liegt nun die Aufgabe zugrunde, ein für die Massenfertigung geeignetes Verfahren zur Herstellung eines Volumenhologramms anzugeben, das eine brillante Wiedergabe zweier oder mehrerer getrennter Bildinformationen ermöglicht, sowie einen Master zur Herstellung des Volumenhologramms.

Die Aufgabe der Erfindung wird durch ein Verfahren zur Herstellung eines Mehrschichtkörpers nach Anspruch 1 sowie ein Sicherheitselement nach Anspruch 12 gelöst.

Das erfindungsgemäße Verfahren zeichnet sich dadurch aus, dass das Volumenhologramm durch eine optische Kontaktkopie eines Masters erzeugt wird, in den miteinander verschachtelte Bereiche mit unterschiedlichen asymmetrischen Oberflächenstrukturen oder Kinoform-Strukturen abgeformt sind, welche unterschiedliche Bildinformationen beinhalten.

Die Bereiche können auf unterschiedliche Weise miteinander verschachtelt sein. Es kann sich beispielsweise um miteinander verschachtelte Raster handeln, beispielsweise um Linienraster. Dabei kann der eine Bereich beispielsweise eine Textinformation wiedergeben und der andere Bereich eine Bildinformation. Es kann aber auch vorgesehen sein, daß der eine Bereich eine Information bereitstellt und der andere Bereich das Umfeld bildet, von dem sich die Information abhebt. Bei der Information kann es sich beispielsweise um ein Logo handeln, das in der einen Betrachtungslage hell vor einem dunklen Hintergrund erscheint und in der anderen Betrachtungslage dunkel vor einem hellen Hintergrund. Es kann also vorgesehen sein, daß beim Kippen oder Bewegen des Volumenhologramms ein Wechsel von einer Positiv-Darstellung zu einer Negativ-Darstellung eintritt und umgekehrt. Weiter können die Bereiche so ausgebildet sein, daß der eine Bereich den Rand des anderen Bereiches bildet. So kann der eine Bereich beispielsweise die Umrandung eines alphanumerischen Zeichens wiedergeben und der andere Bereich das alphanumerische Zeichen selbst.

Bei den asymmetrischen Oberflächenstrukturen handelt es sich vorzugsweise um periodische Strukturen, die einfallendes Licht in Vorzugsrichtungen ablenken bzw. beugen. Auf diese Weise werden brillante Darstellungen erzeugt. Gleichermaßen können die Oberflächenstrukturen auch als sogenannte Kinoform-Strukturen ausgebildet sein, die auch als Zonenlinsen oder Fresnel-Zonenplatten bekannt sind. Es handelt sich dabei um ringförmige Strukturen, bei denen die Zonen sich in ihrer Transparenz oder/und in ihrer optischen Weglänge unterscheiden. Im ersten Fall wird das Licht an den ringförmigen Spalten gebeugt und durch konstruktive Interferenz in Brennpunkten verstärkt. Im anderen Fall wird das Licht durch die unterschiedliche Phasenverschiebung an den Ringen in eine bevorzugte Richtung gelenkt. Die Kinoform-Strukturen können speziell für eine Wellenlänge das kohärente Licht sehr effizient in genau definierte Winkelbereiche beugen. Bei den Kinoform-Strukturen handelt es sich also auch um Strukturen, die das abgelenkte Licht in einer Vorzugsrichtung konzentrieren und auf diese Weise brillante Darstellungen erzeugen.

Durch die saubere Trennung der unterschiedlichen Bildinformationen durch verschachtelte Bereiche mit unterschiedlichen asymmetrischen Oberflächenstrukturen oder Kinoform-Strukturen im Master und die holographische Abbildung des Masters in ein Volumenhologramm mittels optischer Kontaktkopie werden vergleichsweise geringe Anforderungen an den Vervielfältigungsprozeß gestellt. Die für die Herstellung des Masters benötigten Verfahren stellen ebenfalls vergleichsweise geringe Anforderungen. Der Master kann beispielsweise als Folienkörper ausgebildet sein, der eine thermoplastische oder UV-härtbare Masterschicht aufweist, in welche die asymmetrischen Oberflächenstrukturen oder Kinoform-Strukturen abgeformt sind. Das photosensitive Material kann entweder flüssig, viskos oder fest sein. Die Viskosität des photosensitiven Materials kann durch Vorbelichtung mit UV-Licht erhöht werden. Wie Versuche ergeben haben, ist dieser Vorgang temperaturabhängig. Es kann also beispielsweise vorgesehen sein, das photosensitive Material bei einer Temperatur von 30 °C zu verarbeiten. Im Anschluß an die optionale UV-Vorbelichtung, welche der Belichtung mit dem Laser vorgelagert ist, weist das mit UV-Licht vorbehandelte Material die für die weitere Verarbeitung optimale Viskosität auf.

Das erfindungsgemäße Sicherheitselement zeichnet sich durch ein optimal ausgeführtes Volumenhologramm aus, dessen Dicke nur durch die optischen Gesetze der Ausbildung von Volumenhologrammen nach unten begrenzt ist. Das Sicherheitselement kann deshalb auch in Träger eingesetzt werden, die während des Gebrauchs auf Biegung beansprucht werden, wie das beispielsweise bei Banknoten der Fall ist. Weil das Volumenhologramm in einem transparenten Material ausgebildet ist, ist der unerwartete optische Effekt der Ausbildung nichttransparenter reflektierender Bilder in einem transparenten Fenster besonders einprägsam.

Es kann vorgesehen sein, daß die mindestens eine andere Oberflächenstruktur eine asymmetrische Reliefstruktur oder eine symmetrische Reliefstruktur oder eine Reliefstruktur mit variierender Periode oder eine Zufalls-Reliefstruktur oder eine Pseudo-Zufalls-Reliefstruktur aufweist.

Die Oberflächenstrukturen des Masters, die keine Bildinformation beinhalten, werden als Mottenaugen-Struktur und/oder als Spiegel und/oder als Mattstruktur und/oder als Streugitter ausgebildet. Auf diese Weise sind die Bildinformationen besonders deutlich vom Hintergrund abgehoben.

In einer vorteilhaften Ausgestaltung ist vorgesehen, daß die mindestens zwei Oberflächenstrukturen als asymmetrische Oberflächenstrukturen ausgebildet werden.

Es kann vorgesehen sein, daß die mindestens zwei asymmetrischen Oberflächenstrukturen mit einer unterschiedlichen Reliefstruktur und/oder einem unterschiedlichen k-Vektor ausgebildet werden. Bei der asymmetrischen Reliefstruktur kann es sich typischerweise um eine sägezahnförmige Struktur handeln, bei der die ansteigende Flanke mit der Flächennormalen der Oberfläche einen spitzen Neigungswinkel einschließt und die abfallende Flanke in der Flächennormalen verläuft, d.h. eine senkrechte Flanke bildet. Die Reliefstruktur kann sich deshalb im Neigungswinkel unterscheiden. Sie kann sich weiter im Abstand zweier aufeinanderfolgender Erhebungen unterscheiden. Die Oberflächenstrukturen können sich auch in ihren k-Vektoren voneinander unterscheiden, d.h. in der Ausbreitungsrichtung der gebeugten Lichtwelle. Erfindungsgemäß ist vorgesehen, daß zur Belichtung mehrere kohärente Lichtstrahlen mit unterschiedlicher Wellenlänge und/oder unterschiedlicher Einfallsrichtung verwendet werden.

Wie die Versuche eindeutig gezeigt haben, ist die Diffraktionseffizienz der Volumenhologramme mit Vielfachstrahl-Belichtung geringer als die Diffraktionseffizienz der Volumenhologramme mit Einfachstrahl-Belichtung, insbesondere für flüssigkeitsähnliches photosensitives Material, das eine hohe Beweglichkeit der Komponenten aufweist.

Weiter kann vorgesehen sein, daß der kohärente Lichtstrahl durch die photosensitive Schicht hindurchtritt und mindestens an den asymmetrischen Oberflächenstrukturen und/oder den Kinoform-Strukturen des Masters abgelenkt wird, wobei zwischen photosensitiver Schicht und Master keine Luftschicht ausgebildet ist. Auf diese Weise bildet der in die photosensitive Schicht eintretende kohärente Lichtstrahl die Objektwelle und der aus der photosensitiven Schicht austretende kohärente Lichtstrahl und von der asymmetrischen Oberflächenstruktur oder der Kinoform-Struktur des Masters in die photosensitive Schicht reflektierte bzw. gebeugte kohärente Lichtstrahl die Objektwelle, die in der photosensitiven Schicht mit der Objektwelle interferiert und dabei an den Interferenzknoten die Brechzahl der photosensitiven Schicht ändert.

Es kann auch vorgesehen sein, daß der kohärente Lichtstrahl durch die photosensitive Schicht und den Master hindurchtritt und an der Rückseite des Masters abgelenkt wird, wobei zwischen photosensitiver Schicht und Master eine Luftschicht ausgebildet ist.

Weiter kann vorgesehen sein, daß der kohärente Lichtstrahl in einen ersten und in einen zweiten Teilstrahl aufgespalten wird, und daß der erste Teilstrahl durch die photosensitive Schicht und der zweite Teilstrahl von der Rückseite des Masters her durch den Master hindurchtritt. Der Master kann in diesem Fall mit einer transparenten Masterschicht ohne zusätzliche Reflexionsschicht ausgebildet sein.

In einer vorteilhaften Ausbildung kann vorgesehen sein, daß die Oberflächenstrukturen des Masters in die dem Master zugewandte Oberfläche der photosensitiven Schicht abgeformt werden. Auf diese Weise kann ein zusätzliches Sicherheitsmerkmal geschaffen sein, weil bei einer Nachahmung sowohl die Oberflächenstruktur als auch das Volumenhologramm kopiert werden müssen sowie die passergenaue Zuordnung hergestellt werden muß.

Es kann auch vorgesehen sein, daß auf die Vorderseite des Masters eine transparente Ablöseschicht aufgebracht wird, deren Brechzahl gleich oder annähernd gleich der Brechzahl der photosensitiven Schicht ist, und daß sodann auf die Ablöseschicht die photosensitive Schicht aufgebracht wird. Um den optischen Einfluß der Ablöseschicht gering zu halten, ist vorgesehen, den Brechzahlunterschied zwischen der photosensitiven Schicht und der Ablöseschicht gering zu halten oder ganz zu vermeiden.

Häufig ist die Qualität der photosensitiven Schicht so beschaffen, daß es nicht nötig ist, eine Ablöseschicht auf den Master aufzubringen. Die Ablöseschicht kann jedoch optional vorgesehen sein und kann das Ablösen des Masters von der belichteten photosensitiven Schicht erleichtern, wenn vorgesehen ist, daß der Master von der belichteten photosensitiven Schicht abgelöst wird.

Es kann vorgesehen sein, daß die photosensitive Schicht in einer Stärke von 5 µm bis 40 µm verwendet wird. Die optimale Stärke der photosensitiven Schicht ist unter anderem von dem verwendeten Material abhängig und kann durch Versuche ermittelt werden.

Weiter kann vorgesehen sein, daß als photosensitive Schicht eine Photopolymerschicht verwendet wird. Photopolymere sind Harze, die durch Einwirkung von energiereichem Licht, insbesondere UV-Licht, vernetzen, also polymerisieren. Zur Erzeugung der Volumenhologramme sind spezielle Photopolymere vorgesehen, deren Brechungsindex sich durch intensive Belichtung ändert, wie beispielsweise OmniDex 706 von der Fa. DuPont.

Die photosensitive Schicht und der Master werden durch kohärente Lichtstrahlen unterschiedlicher Wellenlänge und/oder unterschiedlicher Richtung belichtet. Auf diese Weise kann erreicht werden, daß die im Volumenhologramm gespeicherten Bildinformationen in unterschiedlichen Farben erscheinen und/oder unter unterschiedlichen Blickwinkeln sichtbar sind.

Vorteilhafterweise kann vorgesehen sein, daß die kohärenten Lichtstrahlen durch einen Laser bereitgestellt werden.

Der Mehrschichtkörper wird in einem Rolle-zu-Rolle-Verfahren hergestellt, indem die photosensitive Schicht über einen Replikationszylinder geführt wird, auf dessen Mantelfläche der Master angeordnet ist, wobei die photosensitive Schicht mit den kohärenten Lichtstrahlen belichtet wird. Das Rolle-zu-Rolle-Verfahren ist besonders vorteilhaft für eine Massenproduktion. Wie Versuche ergeben haben, kann die Umfangsgeschwindigkeit des Replikationszylinders mindestens 5 m/min betragen, sie kann auf mindestens 40 m/min erhöht werden. Weil sich der Mehrschichtkörper bezogen auf die Oberfläche des Masters in Ruhe befindet, sind keine Qualitätseinbußen durch den rotierenden Master zu verzeichnen. Es kann vorgesehen sein, das Aushärten der photosensitiven Schicht vorzunehmen, wenn der Mehrschichtkörper noch in Kontakt mit dem rotierenden Master ist. Zumindest der Beginn des Aushärtens kann vorgesehen sein, wenn der Mehrschichtkörper noch in Kontakt mit dem rotierenden Master ist.

Es kann vorgesehen sein, daß die mindestens eine andere Oberflächenstruktur eine asymmetrische Reliefstruktur oder eine symmetrische Reliefstruktur oder eine Reliefstruktur mit variierender Periode oder eine Zufalls-Reliefstruktur oder eine Pseudo-Zufalls-Reliefstruktur aufweist.

Die Oberflächenstrukturen des Masters, die keine Bildinformation beinhalten, sind als Mottenaugen-Struktur und/oder als Spiegel und/oder als Mattstruktur und/oder als Streugitter ausgebildet.

In einer weiteren vorteilhaften Ausbildung ist vorgesehen, daß die mindestens zwei Oberflächenstrukturen als asymmetrische Oberflächenstrukturen ausgebildet sind.

Es kann vorgesehen sein, daß die k-Vektoren der asymmetrischen Oberflächenstrukturen um 180° zueinander gedreht sind. Eine solche Orientierung der Oberflächenstrukturen ist besonders vorteilhaft, weil die unterschiedlichen Bildinformationen durch bloßes Kippen des Mehrschichtkörpers sichtbar werden. Bei anderen Lagezuordnungen müssen Kipp- und Drehbewegungen gleichzeitig oder nacheinander ausgeführt werden, um alle Bildinformationen sichtbar zu machen. Dieser für die möglichst einfache Betrachtung hinderliche Effekt kann jedoch vorteilhaft sein, wenn beispielsweise neben zwei für den menschlichen Beobachter bestimmten Bildinformationen eine dritte Bildinformation im Volumenhologramm gespeichert ist, die für ein elektronisches Lesegerät bestimmt ist. Diese versteckte Bildinformation kann außerdem beispielsweise nur unter UV-Licht oder Infrarot-Licht auslesbar sein.

Vorteilhafterweise kann vorgesehen sein, daß es sich bei den asymmetrischen Oberflächenstrukturen um Blazegitter handelt. Blazegitter zeichnen sich durch besondere Helligkeit aus, weil sie wegen ihrer asymmetrischen Ausbildung möglichst viel Licht in eine der beiden symmetrischen Beugungsordnungen lenken, vorzugsweise in eine der beiden 1. Ordnungen lenken. Dies ist vorteilhaft, da bei herkömmlichen Gittern das Licht auf einen größeren Raumwinkel verteilt ist und der Hauptanteil der Leistung in der nullten Ordnung steckt und damit ungenutzt bleibt.

Vorzugsweise kann vorgesehen sein, daß das Blazegitter eine Spatialfrequenz von 100 Linien/mm bis 150 Linien/mm aufweist. Das bevorzugte Blazegitter weist also einen Gitterlinienabstand von 10 µm bis 6,7 µm auf. Es können in speziellen Fällen aber auch sehr große Gitterlinienabstände (> 10 µm) und auch sehr kleine Gitterlinienabstände (< 1 µm) bevorzugt sein. Gitter mit sehr großen Gitterlinienabständen, wie beispielsweise asymmetrische achromatische Gitter mit Gitterlinienabständen über 10 µm, können das gesamte einfallende Licht in eine Ordnung reflektieren. Gleichermaßen, insbesondere mit nicht-normalem Einfallswinkel des Belichtungsstrahls, können hochfrequente Gitter hergestellt werden, bei denen eine Ordnung, beispielsweise die -1. Ordnung, nahezu die gesamte Energie des gebeugten Feldes vereint. Die beiden Situationen sind vorteilhaft und es gibt keine Konkurrenz zwischen den verschiedenen "Objektwellen" (dieses Konkurrenzpotential reduziert die Diffraktionseffizienz des erzeugten Volumenhologramms).

Weiter kann vorgesehen sein, daß das Blazegitter eine Gittertiefe von 1 bis 2 µm aufweist.

Blazegitter mit den vorstehend genannten Abmessungen können durch Heißprägen, beispielsweise mit Hilfe einer beheizten Prägewalze, oder photomechanisch durch Belichten eines UV-härtbaren Lacks erzeugt werden.

Es kann vorgesehen sein, daß die Bereiche mit den mindestens zwei Bildinformationen in einem Raster mit einer Rasterweite von 50 µm bis 20 µm angeordnet sind. Unter besonders günstigen Bedingungen, d.h. bei Betrachtung kontrastreicher Motive bei guter Beleuchtung liegt die Grenze des Auflösungsvermögens des menschlichen Auges bei 20 µm. Das Auflösungsvermögen kann sich um den Faktor 3 bis 5 bei geringem Kontrast und ungünstiger Beleuchtung verschlechtern. Rasterweiten von 20 µm bis 50 µm können also durch das unbewaffnete menschliche Auge nicht mehr aufgelöst werden, so daß die Rasterung der Bildinformation nicht wahrnehmbar ist.

Weiter kann vorgesehen sein, daß es sich bei dem Raster um ein Streifenraster handelt. Ein Streifenraster ist besonders einfach realisierbar. Es können aber auch andere Raster vorgesehen sein, insbesondere wenn mehr als zwei unterschiedliche Bildinformationen ineinander verschachtelt werden sollen. Es kann sich beispielsweise um einen Pixel-Raster handeln, wobei der Master mittels Elektronenstrahltechnologie herstellbar ist. Durch die Rasterung ist gewährleistet, daß die Bildinformationen auch im Volumenhologramm voneinander getrennt sind, so daß Helligkeits- und/oder Schärfeverluste durch Überlagerung von Bildinformationen im Volumenhologramm nicht auftreten.

Es kann vorgesehen sein, daß die Masterschicht aus einer transparenten Replizierschicht ausgebildet ist.

Wie bereits weiter oben ausgeführt, kann vorgesehen sein, den in die photosensitive Schicht einfallenden kohärenten Lichtstrahl an der Vorderseite des Masters oder an der Hinterseite des Masters zu reflektieren.

Es kann also vorgesehen sein, daß auf die Vorderseite des Masters eine Reflexionsschicht aufgebracht ist oder daß auf die Rückseite des Masters eine Reflexionsschicht aufgebracht ist.

Weiter kann vorgesehen sein, daß die Reflexionsschicht als metallische Schicht ausgebildet ist. Die metallische Schicht kann vorzugsweise aus einem gut reflektierenden Metall, wie Aluminium, Silber, Gold oder Kupfer ausgebildet sein oder aus einer Metallegierung. Die metallische Schicht kann mit einer Schichtdicke von einigen Nanometern ausgebildet sein. Die Schichtdicke kann auch so gewählt sein, daß sie im Auflicht reflektiert und im Durchlicht transparent erscheint. Die bevorzugte Schichtdicke kann vorteilhafterweise durch Versuch bestimmt werden, da die Transparenz neben der Schichtdicke unter anderem vom Material der metallischen Schicht und von der Aspektrate der Oberflächenstruktur abhängt.

Wenn die Reflexionsschicht auf der Vorderseite des Masters ausgebildet ist, kann vorgesehen sein, daß der Master aus reflektierendem Material ausgebildet ist, beispielsweise aus einem gut reflektierenden Metall. Der Master kann beispielsweise als rotierende Masterwalze ausgebildet sein.

Es kann auch vorgesehen sein, daß die Reflexionsschicht als optische Trennschicht ausgebildet ist. Es kann sich dabei um ein anorganisches Dielektrikum handeln, wie beispielsweise ZnS.

Weiter kann vorgesehen sein, daß die Reflexionsschicht als HRI-Schicht ausgebildet ist.

Es kann auch vorgesehen sein, daß anstelle der Reflexionsschicht mehrere hochbrechende dielektrische Schichten angeordnet sind, die jeweils eine Schichtdicke von λ/2 oder λ/4 aufweisen, wobei λ eine Lichtwellenlänge bezeichnet.

Es kann weiter vorgesehen sein, die Reflexion an Flächen auszunutzen, die an Luft oder ein anderes niedrigbrechendes Medium grenzen und bei einem transparenten Master insbesondere auf die Reflexionsschicht auf der Rückseite des Masters zu verzichten.

Die metallische Schicht und/oder die dielektrische Schicht und/oder das Dünnfilmschichtsystem und/oder die Flüssigkristall-Schicht und/oder die Druckschicht können bzw. kann entweder die gesamte Oberfläche der photosensitiven Schicht bedecken, im Register zu den Bildern des Volumenhologramms wie gleichermaßen zu einem KINEGRAM® aufgebracht sein, im partiellen Register zu den Bildern des Volumenhologramms wie gleichermaßen zur normalen Demetallisation aufgebracht sein oder können bzw. kann partiell aufgebracht sein als ein Muster, das nicht im Register mit den Bildern des Volumenhologramms ist. Das Oberflächenrelief kann, speziell wenn es mit Metall oder HRI-Material beschichtet ist, eine optische Funktion erhalten, die das Volumenhologramm ergänzt.

Weiter kann vorgesehen sein, das Volumenhologramm in einem Fenster einer Banknote oder einer ID-Card anzuordnen.

Im folgenden wird die Erfindung anhand von mehreren Ausführungsbeispielen unter Zuhilfenahme der beiliegenden Zeichnungen beispielhaft verdeutlicht.
- Fig. 1a: ein Master zur erfindungsgemäßen Erzeugung eines Volumen-Hologramms in schematischer Darstellung in der Draufsicht;
- Fig. 1b: schematische Detailansichten aus Fig. 1a;
- Fig. 2a: eine Prinzipdarstellung eines Kontaktkopierverfahrens;
- Fig. 2b: eine Prinzipdarstellung der Funktion eines nach Fig. 2a hergestellten Volumenhologramms;
- Fig. 3a bis 3i: Fertigungsstufen eines ersten Beispiels eines Herstellungsverfahrens in schematischer Darstellung;
- Fig. 4a bis 4h: Fertigungsstufen eines zweiten Beispiels eines Herstellungsverfahrens in schematischer Darstellung;
- Fig. 5a bis 5g: Fertigungsstufen eines dritten Beispiels eines Herstellungsverfahrens in schematischer Darstellung;
- Fig. 6a und 6b: eine Fertigungseinrichtung in schematischer Darstellung zur Ausführung eines Ausführungsbeispiels des erfindungsgemäßen Herstellungsverfahrens;
- Fig. 7a bis 7d: Fertigungsstufen des Ausführungsbeispiels des erfindungsgemäßen Herstellungsverfahrens in Fig. 6 in schematischer Darstellung;
- Fig. 8a und 8b: ein Anwendungsbeispiel in Form eines streifenförmigen Sicherheitselements.

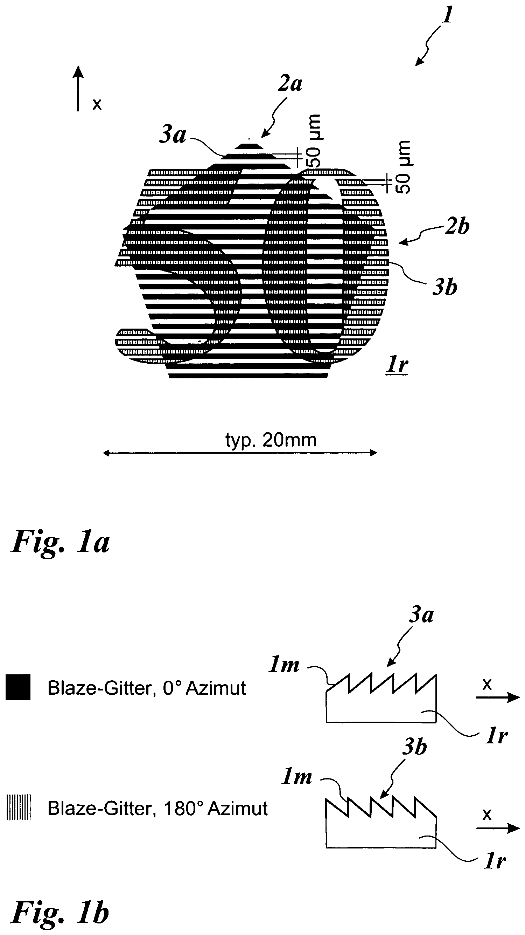

Die Fig. 1a zeigt einen Master 1 zur Herstellung eines Volumen-Hologramms in vergrößerter schematischer Darstellung in der Draufsicht. Der Master 1 kann als Mehrschichtkörper ausgebildet sein mit mindestens einer Replizierschicht 1r, die auf der Oberseite Bildbereiche 2a und 2b aufweist, die aus streifenförmigen, parallel zueinander angeordneten Oberflächenbereichen 3a und 3b gebildet sind. Die streifenförmigen Oberflächenbereiche 3a und 3b haben jeweils eine Breite von 50 µm und sind im Abstand von jeweils 50 µm zueinander angeordnet, wobei der Zwischenraum zwischen den streifenförmigen Oberflächenbereichen 3a durch die streifenförmigen Oberflächenbereiche 2b ausgefüllt ist und umgekehrt. Die streifenförmigen Oberflächenbereiche 2a und 2b bilden ineinander verschachtelte Linienraster, die unterhalb des Auflösungsvermögens eines unbewaffneten menschlichen Auges liegen. Deshalb erscheinen die Bildbereiche 2a und 2b dem Betrachter als geschlossene Bereiche, wobei es sich in dem in Fig. 1a dargestellten Beispiel bei dem Bildbereich 2a um ein Logo und bei dem Bildbereich 2b um alphanumerische Zeichen handelt.

Die Oberflächenbereiche 3a und 3b weisen Reliefstrukturen in Art eines Blaze-Gitters auf und sind mit einer Reflexionsschicht 1m versehen. In dem in Fig. 1a dargestellten Beispiel handelt es sich bei der Reflexionsschicht 1m um eine dünne metallische Schicht. Blazegitter sind spezielle Beugungsgitter in der Optik. Die Gitterelemente sind um einen sogannten Blazewinkel geneigt. Das führt zu einer stufenförmigen, asymmetrischen Oberflächen-Reliefstruktur mit einer im spitzen Winkel gegen die Flächennormale geneigten ansteigenden Vorderflanke und einer steil abfallenden Rückflanke. Wie in Fig. 1b zu erkennen, handelt es sich bei den Reliefstrukturen der Oberflächenbereiche 3a und 3b um gleiche Reliefstrukturen, die um 180° gegeneinander gedreht angeordnet sind (in Fig. 1b mit 0° Azimut und 180° Azimut bezeichnet).

Wegen der um 180° zueinander gedrehten Reliefstrukturen der Oberflächenbereiche 3a und 3b erscheinen die Bildbereiche 2a und 2b beim Kippen des Masters als klar getrennte Bildbereiche, die dabei hell aufleuchten.

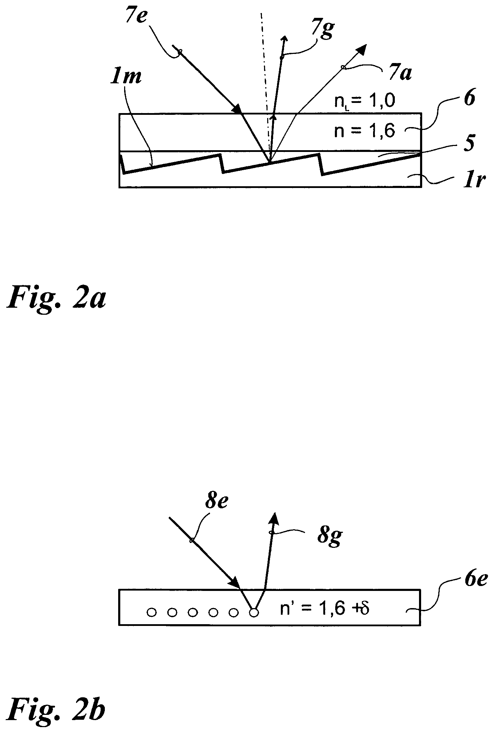

Die Fig. 2a zeigt nun schematisch die Verwendung des Masters 1 aus Fig. 1a und 1b zur Herstellung eines Volumenhologramms, das die optischen Eigenschaften des Masters 1 aufweist.

Die auf der Replizierschicht 1r angeordnete Reflexionsschicht 1m ist von einer transparenten Deckschicht 5 begedeckt, bei der es sich um eine Ablöseschicht handeln kann, die später das Trennen einer auf der Ablöseschicht aufgebrachten Photopolymerschicht 6 erleichtern kann. Die Photopolymerschicht 6 weist in dem dargestellten Beispiel eine Brechzahl n = 1,6 auf. Die Photopolymerschicht 6 ist zunächst unvernetzt oder nur gering vernetzt. Vorteilhafterweise weist die Deckschicht 5 die gleiche Brechzahl oder eine annähernd gleiche Brechzahl wie die Photopolymerschicht 6 auf, so daß die Deckschicht 5 optisch keine Wirkung hat.

Ein zum Einschreiben eines Volumenhologramms auf die Photopolymerschicht 6 auftreffender Laserstrahl 7e wird zunächst an der Photopolymerschicht 6 gebrochen und anschließend an der Reflexionsschicht 1m durch Beugung an der Gitterstruktur der Replizierschicht 1r abgelenkt. In der in Fig. 2a gewählten schematische Darstellung ist der gebeugte Strahl 1. Ordnung mit 7g bezeichnet, der an der gezeichneten Flanke reflektierte Strahl 0. Ordnung mit 7a. Weil es sich bei der Gitterstruktur um ein Blaze-Gitter handelt, weist der Strahl 1. Ordnung die höchste Intensität auf. Der Strahl 1. Ordnung verkörpert die Objektwelle, die mit der durch den einfallenden Strahl 7e verkörperten Referenzwelle interferiert und dabei in der Photopolymerschicht 6 lokale Polimerisation auslöst. Infolge der Polymerisation ist die Brechzahl der Photopolymerschicht geändert. Die Brechzahländerungen sind in den sogenannten Braggschen Ebenen lokalisiert, die zuerst in Verbindung mit der Röntgenstrukturanalyse von Kristallen beschrieben wurden.

Fig. 2b zeigt nun eine Photopolymerschicht 6e, bei der es sich um die belichtete Photopolymerschicht 6 in Fig. 2a handelt. Die Photopolymerschicht 6e weist eine ortsabhängige Brechzahl n' = n + δ auf, wodurch in der Photopolymerschicht 6e ein dreidimensionales Brechzahlmuster in Form eines Volumenhologramms gespeichert ist, welches die Rekonstruktion das durch die Oberflächenstruktur der Replizierschicht 1r beeinflußte Interferenzmuster dauerhaft gespeichert ist.

Bei der Photopolymerschicht kann es um das Photopolymer OmniDex 706 der Fa. DuPont handeln, welches die genannte Eigenschaft der lokalen Brechzahländerung durch Belichtung aufweist. Es sind auch Photopolymere bekannt, die als flüssige Substanz vorliegen und beispielsweise durch Einwirkung von UV-Licht polymerisieren und dadurch aushärten. Es kann auch vorgesehen sein, das Photopolymer als Schicht aufzugießen und durch eine schwache UV-Lichteinwirkung vorzuhärten und/oder es nach der Ausbildung des Volumenhologramms durch UV-Lichteinwirkung oder durch Wärmebehandlung auszuhärten.

In Fig. 2b ist ein zur Rekonstruktion der Gitterbilder auf die Photopolymerschicht 6e auftreffender Lichtstrahl mit 8e bezeichnet und ein aus der Photopolymerschicht 6e austretender und an dem Volumenhologramm gebeugter Strahl mit 8g. Der aus der Photopolymerschicht 6e austretende Strahl 8g entspricht in Richtung und Lichtstärke dem gebeugten Strahl 7g in Fig. 2a. Zur Verdeutlichung des beschriebenen Vorgangs sind die Knoten einer der Braggschen Ebenen schematisch durch Kreise dargestellt.

Die nach dem vorstehend beschriebenen Verfahren hergestellte Photopolymerschicht 6e weist demnach eine optische Wirkung auf, die den Eindruck erweckt, daß ein Blazegitter mit einer reflektierenden Reliefstruktur vorliegt. Ein Volumenhologramm weist einen hohen Kopierschutz auf, weil Herstellungsparameter, wie die genaue Wellenlänge des Laserlichts und der genaue Belichtungswinkel bekannt sein müssen, um das Volumenhologramm zu reproduzieren. Das Kopieren mit polychromatischem Licht ist von vornherein ausgeschlossen. Aber auch das Kopieren mit monochromatischem Licht ist beträchtlich erschwert, weil durch eine Reihe von Ursachen eine Drift der zur Rekonstruktion verwendbaren Wellenlänge zur Ursprungswellenlänge, die bei der Erzeugung des Volumenhologramms verwendet wurde, eintritt. Eine der Ursachen ist das Schrumpfen oder Stauchen der Bragg-Gitter beim Aushärten des Photopolymerschicht 6e. Hinzu kommt, daß die Drift nicht homogen über die gesamte Ausdehnung des Volumenhologramms eintritt und auch in der Produktion variiert. Solche Deformationen können weiter durch das Aufkleben der Photopolymerschicht mit einem Heißkleber hervorgerufen werden oder gezielt eingebracht werden, um beispielsweise das Volumenhologramm mit einer personalisierten Information zu versehen. Wegen der beschriebenen Variationen der Drift zwischen der zur Rekonstruktion des Volumenhologramms verwendbaren Wellenlänge zur Ursprungswellenlänge und weiter der Inhomogenität der Drift ist die Fälschungssicherheit des Volumenhologramms sehr hoch.

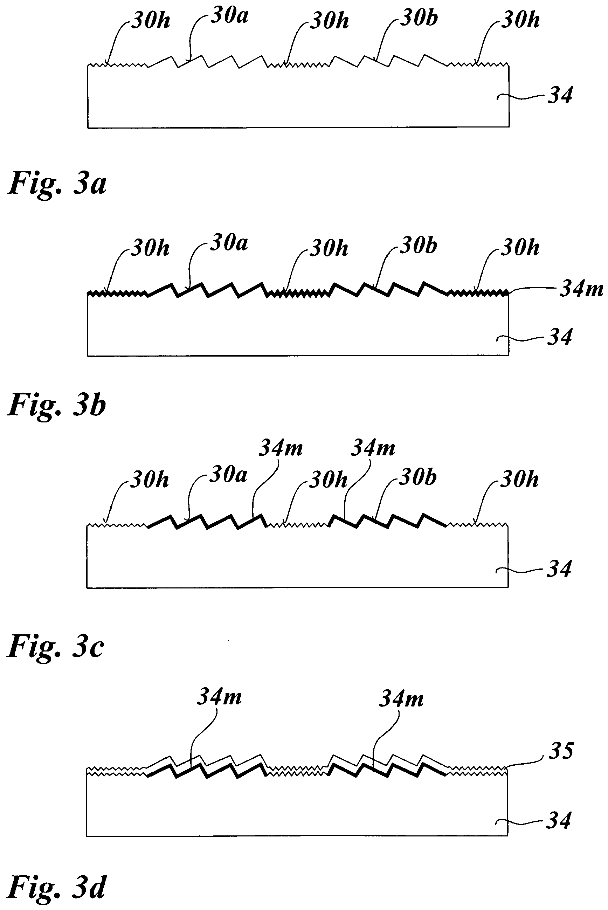

Die Fig. 3a bis 3i zeigen nun die Verfahrensschritte zur Herstellung eines ersten Beispiels des Mehrschichtkörpers. Fig. 3a zeigt in schematischer Schnittdarstellung eine Replizierschicht 34, die aus einem thermoplastischen Kunststoff gebildet sein kann, in deren Oberseite Bereiche ausgebildet sind, in die als Blazegitter ausgebildete asymmetrische Reliefstrukturen 30a und 30b abgeformt sind, die bei gleichem Verlauf eine um 180° verdrehte Anordnung aufweisen. Die Reliefstrukturen 30a und 30b weisen in dem in Fig. 3a bis 3i dargestellten Beispiel eine Gitterweite von 10 µm auf, d.h. eine Spatialfrequenz von 100 Linien/mm, und eine Gittertiefe von 2 µm auf bei einer Gesamtdicke der Replizierschicht 34 von 22 µm. Die Oberseite der Replizierschicht 34 weist weiter Bereiche mit einer Reliefstruktur 30h auf, die einen Hintergrundbereich für die Bereiche mit den Reliefstrukturen 30a und 30b bilden. Die Reliefstruktur 30h ist mit einem deutlich höheren Tiefen-zu-Breiten-Verhältnis ausgebildet als die Reliefstrukturen 30a und 30b, deren Tiefen-zu-Breiten-Verhältnis mit den vorstehend genannten Parametern 2/10 = 0,2 ist. Die Reliefstruktur 30h kann beispielsweise ein Tiefen-zu-Breiten-Verhältnis von 1 bis 5 aufweisen. Bei der Reliefstruktur 30h handelt es sich nicht um ein Blazegitter, sondern um eine "Mottenaugen"-Struktur, die das einfallende Licht absorbiert und daher für einen Betrachter dunkel erscheint. Sie bildet einen neutralen Hintergrund für die durch die Reliefstrukturen 30a und 30b generierten Bilder. Es kann sich bei der Reliefstruktur 30h auch um eine spiegelnde ebene Fläche, eine Mattstruktur oder eine Gitterstruktur, welche das einfallende Licht beugt, handeln.

Das auch als Aspektrate bezeichnete dimensionslose Tiefen-zu-Breiten-Verhältnis ist definiert als das Verhältnis der Tiefe der "Täler" zu dem Abstand zweier benachbarter "Berge" einer vorzugsweise periodischen Reliefstruktur.

Fig. 3b zeigt nun die Replizierschicht 34 mit einer auf der Oberseite der Replizierschicht aufgebrachten metallischen Schicht 34m. Die metallische Schicht 34m kann beispielsweise durch Sputtern aufgebracht sein. Bei der metallischen Schicht 34m kann es sich um gut reflektierende Metalle wie Aluminium, Silber, Gold oder dergleichen handeln oder um eine Metallegierung.

Fig. 3c zeigt nun die Replizierschicht 34 mit partiell abgetragener metallischer Schicht 34m. Die metallische Schicht ist in den Bereichen mit der Reliefstruktur 30h abgetragen, die so nicht reflektierende Bereiche bilden. Allerdings kann auch auf die Demetallisierung der Reliefstruktur 30h verzichtet werden, weil eine solche Mattstruktur infolge der ungerichteten Streuung wenig oder gar nicht reflektiert.

Fig. 3d zeigt nun die Replizierschicht 34 mit partiell abgetragener metallischer Schicht 34m, auf welche eine Ablöseschicht 35 aufgebracht ist.

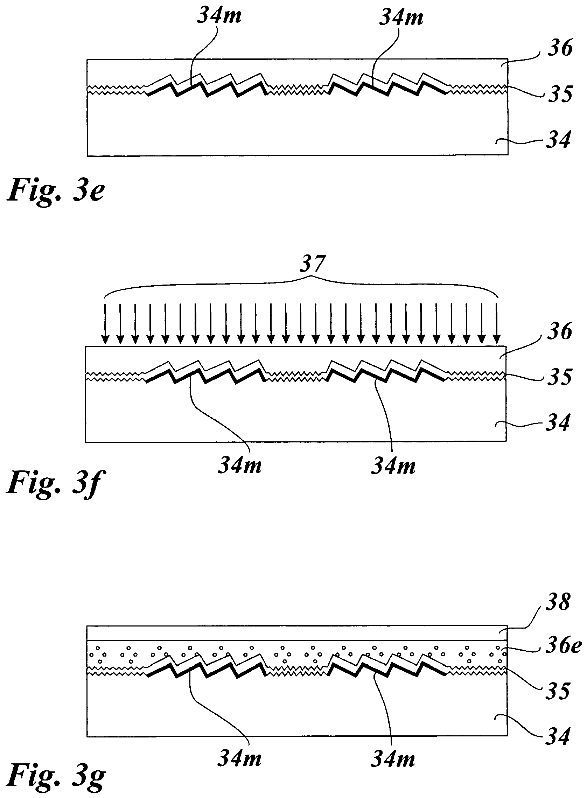

Fig. 3e zeigt die in Fig. 3d bezeichneten Schichten mit einer Photopolymerschicht 36, die auf die Ablöseschicht 35 in einer Dicke von 5 µm bis 20 µm aufgetragen ist. Die Photopolymerschicht 36 weist die gleiche Brechzahl wie die Ablöseschicht 35 auf, so daß an der Grenzfläche zwischen der Photopolymerschicht 36 und der Ablöseschicht 35 keine optische Brechung eintritt. Die Photopolymerschicht 36 kann je nach Konsistenz der unvernetzten Photopolymerschicht nach dem Auftragen vorgehärtet sein, um für den nächsten Verarbeitungsschritt eine ausreichende Formstabilität zu haben. Beispielsweise kann die Photopolymerschicht 36 durch eine Vorbelichtung anpolymerisiert sein.
Fig. 3f zeigt nun die Belichtung der Photopolymerschicht 36 mit Laserlicht 37. Dadurch wird in der Photopolymerschicht 36 ein Interferenzmuster durch Interferenz des eingestrahlten Laserlichts 37 (Referenzwelle) mit dem von der metallischen Schicht 34m gebeugten bzw. reflektierten Laserlicht (Objektwelle) erzeugt und an den Interferenzknoten die Photopolymerschicht 36 polymerisiert bzw. weiter polymerisiert. Infolgedessen ist dort die Brechzahl der Photopolymerschicht verändert und in der Photopolymerschicht 36 durch lokale Brechzahländerung ein Volumenhologramm ausbildet. In dem in Fig. 3f dargestellten Beispiel treffen die Strahlen des Laserlichts 37 senkrecht auf die Photopolymerschicht 36 auf. Es kann aber auch vorgesehen sein, die Strahlen des Laserlichts unter einem Winkel geneigt auf die Polymerschicht 36 zu richten, beispielsweise unter einem Winkel von 14° gegen die Flächennormale.

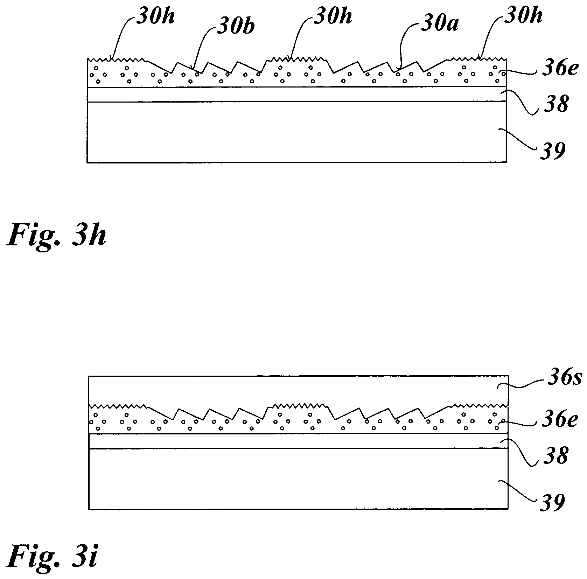

Fig. 3g zeigt den Schichtaufbau in Fig. 3f mit belichteter und mittels UV-Bestrahlung ausgehärteter Photopolymerschicht 36e, auf welche eine Kleberschicht 38 aufgebracht ist. Mit Hilfe der Kleberschicht 38 kann die Photopolymerschicht 36e auf ein Substrat 39 aufgebracht werden, wie in Fig. 3h dargestellt. Nach dem Aufbringen der Photopolymerschicht 36e und dem Ablösen der nun nicht mehr benötigten Replizierschicht 34 samt Ablöseschicht 35 sind die Reliefstrukturen 30a, 30b und 30h ungeschützt und können daher abgenutzt, beschädigt oder verschmutzt werden. Deshalb ist eine Schutzschicht 36s vorgesehen, die wie in Fig. 3i dargestellt, die Photopolymerschicht 36e vollflächig abdeckt. Die den Reliefstrukturen 30a, 30b und 30h abgewandte Seite der Schutzschicht 36s bildet eine glatte Oberfläche.

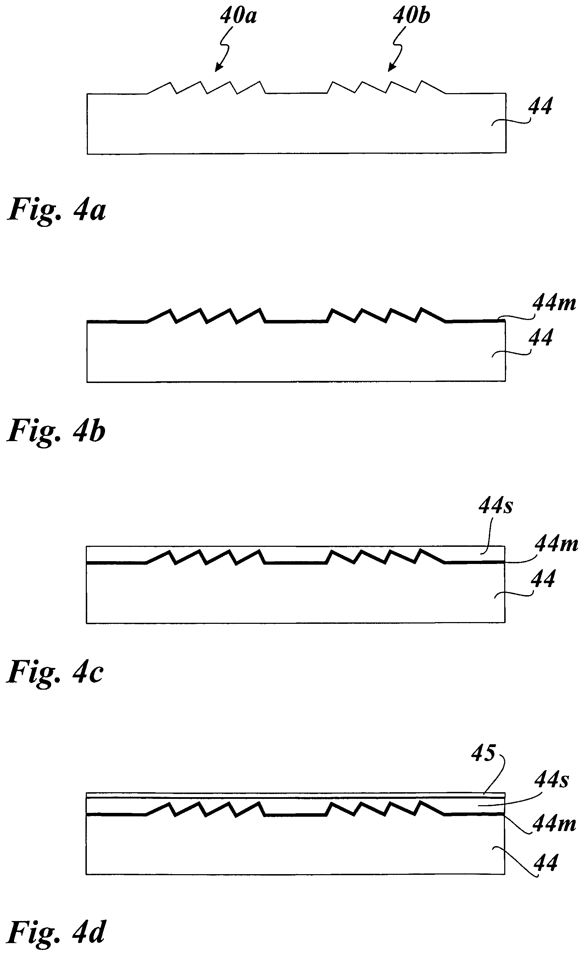

Die Fig. 4a bis 4h zeigen nun die Verfahrensschritte zur Herstellung eines zweiten Beispiels des Mehrschichtkörpers.

Fig. 4a zeigt in schematischer Schnittdarstellung eine Replizierschicht 44, die aus einem thermoplastischen Kunststoff gebildet sein kann, in deren Oberseite Bereiche ausgebildet sind, in die als Blazegitter ausgebildete asymmetrische Reliefstrukturen 40a und 40b abgeformt sind, die bei gleicher Ausbildung eine um 180° verdrehte Anordnung aufweisen. Die Reliefstrukturen 40a und 40b weisen in dem in Fig. 4a bis 4h dargestellten Beispiel die gleichen Parameter auf wie in dem weiter oben in Fig. 3a bis 3i dargestellten Beispiel (10 µm Gitterweite, 2 µm Gittertiefe, 22 µm Gesamtdicke der Replizierschicht 44).

Fig. 4b zeigt nun die Replizierschicht 44 mit einer auf der Oberseite der Replizierschicht aufgebrachten metallischen Schicht 44m. Die metallische Schicht 44m kann beispielsweise durch Sputtern aufgebracht sein. Bei der metallischen Schicht 44m kann es sich um gut reflektierende Metalle wie Aluminium, Silber, Gold oder dergleichen handeln oder um eine Metallegierung.

Fig. 4c zeigt nun den Schichtverbund aus Replizierschicht 44 und metallischer Schicht 44m mit einer Schutzlackschicht 44s, die auf die metallische Schicht 44m in einer Dicke von 1 µm bis 3 µm aufgetragen ist und die Reliefstrukturen 40a und 40b vollständig ausfüllt. Die der metallischen Schicht 44m abgewandte Seite der Schutzlackschicht 44s weist eine ebene Oberfläche auf.

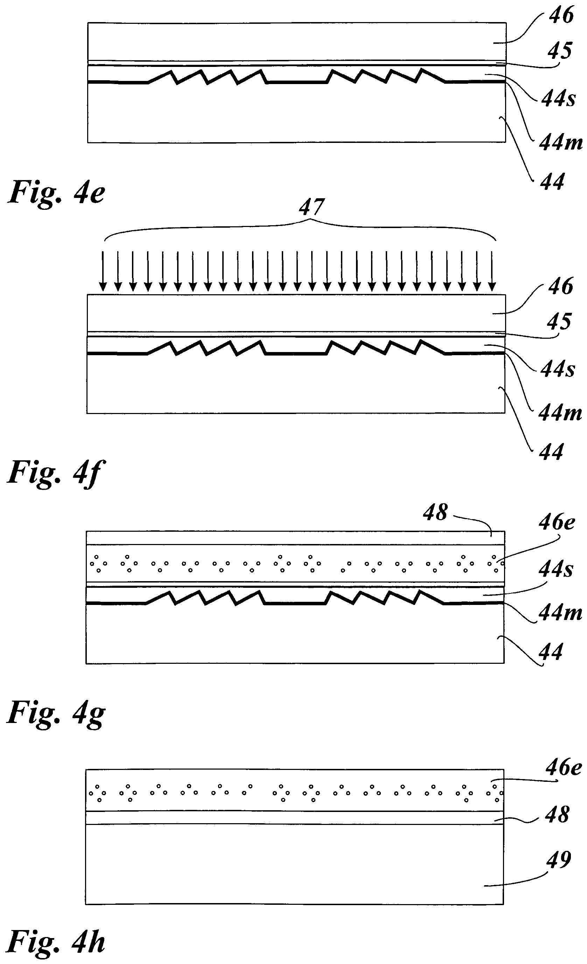

In Fig. 4d ist auf die Schutzlackschicht 44s eine Ablöseschicht 45 aufgetragen, auf welche in Fig. 4e eine Photopolymerschicht 46 aufgetragen ist. Die Photopolymerschicht 46 kann je nach Konsistenz der unvernetzten Photopolymerschicht nach dem Auftragen vorgehärtet sein, um für den nächsten Verarbeitungsschritt eine ausreichende Formstabilität zu haben. Beispielsweise kann die Photopolymerschicht 46 durch eine Vorbelichtung anpolymerisiert sein.

Fig. 4f zeigt die Belichtung der Photopolymerschicht 46 mit Laserlicht 47. Dadurch wird in der Photopolymerschicht 46 ein Interferenzmuster durch Interferenz des eingestrahlten Laserlichts 47 (Referenzwelle) mit dem von der metallischen Schicht 44m gebeugten bzw. reflektierten Laserlicht (Objektwelle) erzeugt und an den Interferenzknoten die Photopolymerschicht 46 polymerisiert bzw. weiter polymerisiert. Infolgedessen ist dort die Brechzahl der Photopolymerschicht verändert.

In Fig. 4g ist die Photopolymerschicht 46 in eine belichtete und ausgehärtete Photopolymerschicht 46e überführt und mit einer Kleberschicht 48 versehen.

Fig. 4h zeigt nun die auf ein Trägersubstrat 49 aufgebrachte ausgehärtete Photopolymerschicht 46e, die mittels der Kleberschicht 48 auf dem Trägersubstrat 49 befestigt ist. Bei der Kleberschicht 48 kann es sich um einen Heißkleber handeln. Die mit dem Kleben einhergehenden Schrumpfungen der entwickelten Photopolymerschicht 36e können die Fälschungssicherheit des in der Photopolymerschicht 36e gespeicherten Volumenhologramms weiter erhöhen, weil die durch das Kleben deformierten Braggschen Ebenen des Volumenhologramms bestenfalls punktweise auslesbar sind.

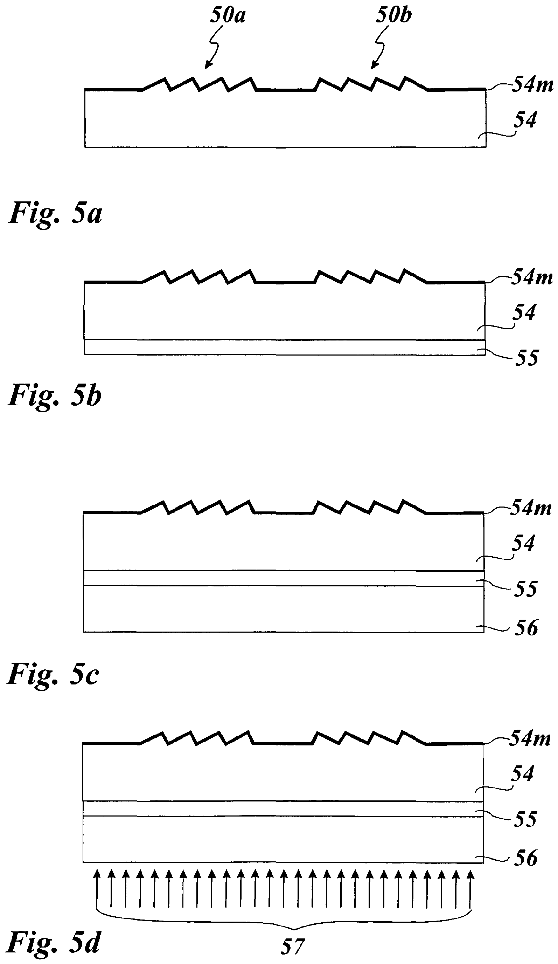

Die Fig. 5a bis 5g zeigen nun die Verfahrensschritte zur Herstellung eines dritten Beispiels des Mehrschichtkörpers.

Die Fig. 5a zeigt eine Replizierschicht 54 aus PET mit Bereichen mit Reliefstrukturen 50a und 50b, die sich wie in den zuvor beschriebenen Ausführungen im wesentlichen durch ihre um 180° gedrehete Anordnung voneinander unterscheiden, und bei denen es sich um Blazegitter handelt. Die Reliefstrukturen 50a und 50b können aber auch unterschiedlich ausgebildet sein und sich beispielsweise in der Gitterabstand und/oder in der Gittertiefe und/oder im Neigungswinkel der Gitterflanken voneinander unterscheiden. In dem in Fig. 5a dargestellten Beispiel beträgt der Gitterabstand der Reliefstrukturen 50a und 50b 10 µm, die Gittertiefe 2 µm und die Gesamtdicke der Replizierschicht 54 weniger als 12 µm.

Auf die mit den Reliefstrukturen 50a und 50b ausgebildete Oberseite der Replizierschicht 54 ist eine metallische Schicht 54 aufgebracht, die wie die metallischen Schichten in den vorstehend beschriebenen Beispielen ausgebildet sein kann (siehe Fig. 3b, 4b).

In Fig. 5b ist auf die Unterseite der Replizierschicht 54 eine Ablöseschicht 55 aufgebracht, deren Brechzahl gleich oder annähernd gleich der Brechzahl der Replizierschicht 54 ist, so daß in der Grenzschicht zwischen der Replizierschicht 54 und der Ablöseschicht 55 keine optische Brechung eintritt.

In Fig. 5c ist nun auf die Ablöseschicht 55 eine Photopolymerschicht 56 aufgebracht, welche die Eigenschaften der weiter oben beschriebenen Photopolymerschichten 36 (siehe Fig. 3e) und 46 (siehe Fig. 4e) aufweist.

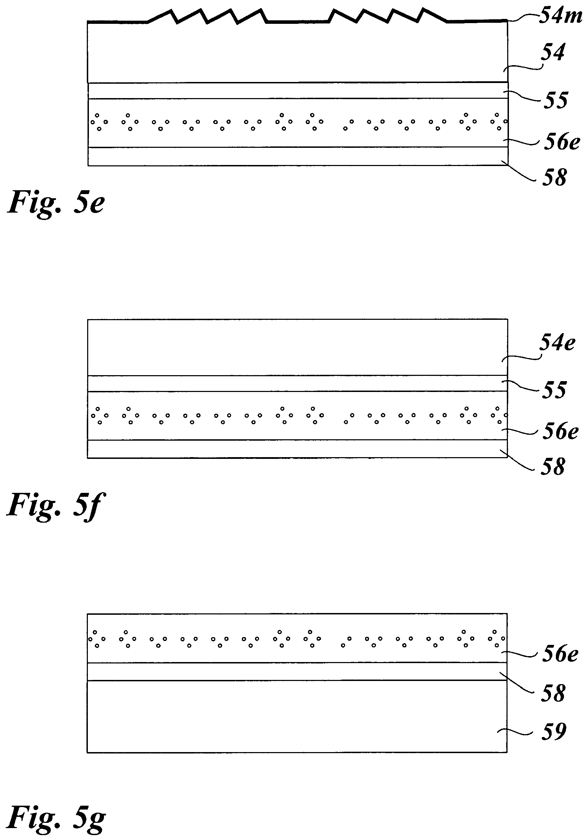

Fig. 5d zeigt die Belichtung der Photopolymerschicht 56 mittels Laserlicht 57 und Fig. 5e den für die Übertragung auf ein Trägersubstrat vorbeiteten Mehrschichtkörper, bei der auf einer belichteten und ausgehärteten Photopolymerschicht 56e, die aus der Photopolymerschicht 56 in Fig. 5d erzeugt ist, eine Kleberschicht 58 aufgebracht ist.

Fig. 5f zeigt eine Variante von Fig. 5e, die eine Replizierschicht 54e aufweist, welche aus der Replizierschicht 54 durch Abtragen der Reliefstrukturen 50a und 50b und der metallischen Schicht 54m erzeugt ist.

Schließlich zeigt Fig. 5g ein Trägersubstrat 59, bei dem es sich um ein Sicherheitsdokument handeln kann, mit der mittels der Kleberschicht 58 dauerhaft befestigten gehärteten Photopolymerschicht 56e.

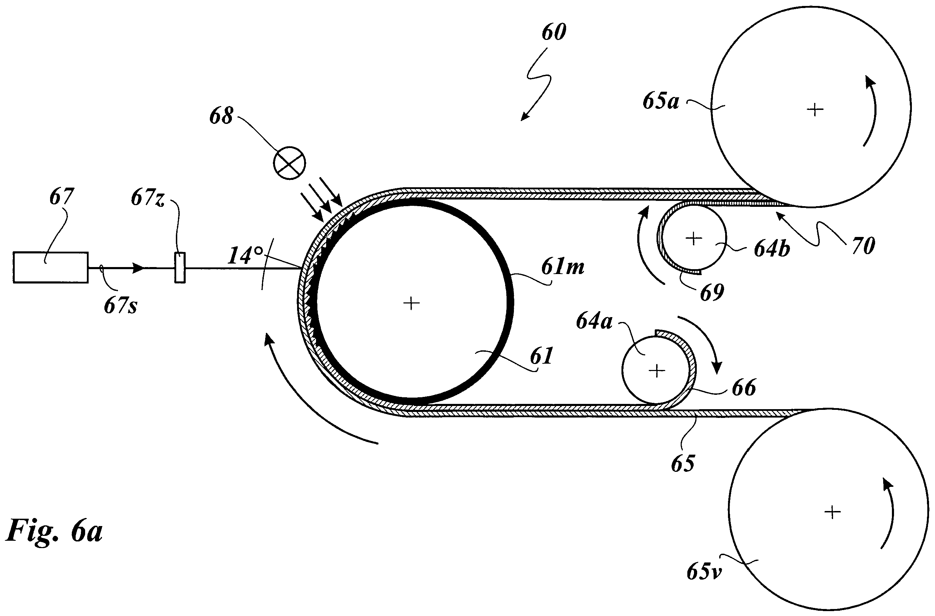

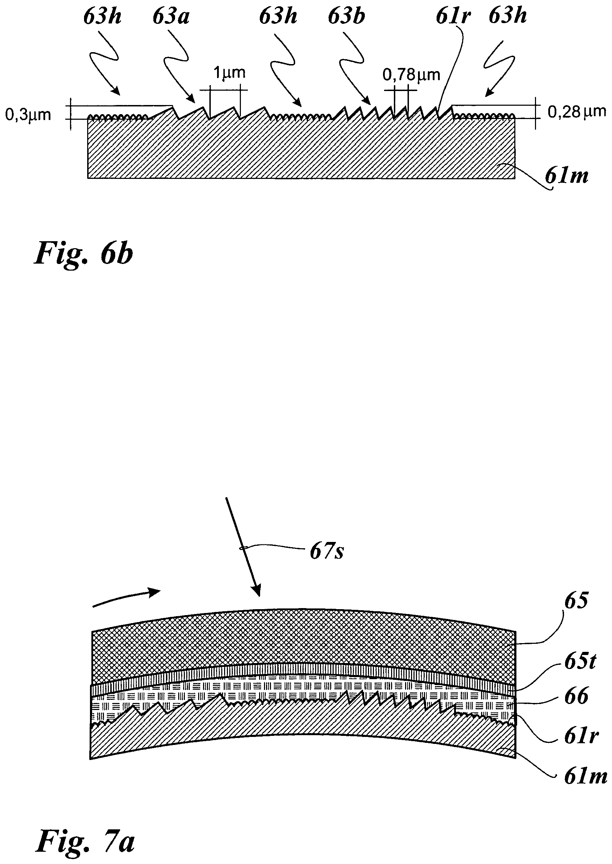

Fig. 6a zeigt nun in schematischer Darstellung ein Beispiel einer Fertigungseinrichtung 60 zur erfindungsgemäßen Herstellung eines Mehrschichtkörpers. Bei der Fertigungseinrichtung 60 handelt es sich um eine Fertigungseinrichtung für das sogenannte Rolle-zu-Rolle-Verfahren. Ein Replikationszylinder 61 ist auf seiner Außenseite mit einem Oberflächenrelief-Master 61m beschichtet. Der Replikationszylinder 61 weist in dem in Fig. 6 dargestellten Ausführungsbeispiel einen Durchmesser von 200 mm auf und rotiert mit einer Umfangsgeschwindigkeit von 5 m/min. Es kann eine maximale Umfangsgeschwindigkeit bis 40 m/min vorgesehen sein.

Der Oberflächenrelief-Master 61m weist, wie in Fig. 6b zu erkennen, ein erstes Blazegitter 63a mit einer Gitterperiode von 1 µm und einer Gittertiefe von 300 nm auf und ein zweites Blazegitter 63b mit einer Gitterperiode von 0,78 µm und einer Gittertiefe von 280 nm auf. Die nicht mit dem ersten Blazegitter 63a oder mit dem zweiten Blazegitter 63b belegten Oberflächenbereiche 63h des Oberflächenrelief-Masters 61m weisen ein Oberflächenrelief mit einer Mattstruktur auf, welche auffallendes Licht diffus zerstreut und deshalb den optischen Eindruck eines "schwarzen Spiegels" hervorruft. Der Oberflächenrelief-Master 61m ist in diesem Ausführungsbeispiel aus einer Nickel-Cobalt-Legierung ausgebildet. Die Oberfläche des Oberflächenrelief-Masters 61m ist mit einer dünnen Reflexionsschicht 61r aus einem hochreflektierenden Metall, beispielsweise Gold, beschichtet.

Eine transparente Trägerfolie 65 ist von einer Vorratsrolle 65v abgewickelt, über den Replikationszylinder 61 geführt und auf einer Aufwickelrolle 65a wieder aufgewickelt. In dem in Fig. 7a dargestellten Ausführungsbeispiel ist zunächst auf die Trägerfolie 65 eine Trennschicht 65t aufgebracht, bevor die Photopolymerschicht 66 aufgedruckt ist. Die Trennschicht 65t kann vorgesehen sein, um das spätere Ablösen der Trägerfolie 65 von der Photopolymerschicht zu erleichtern.

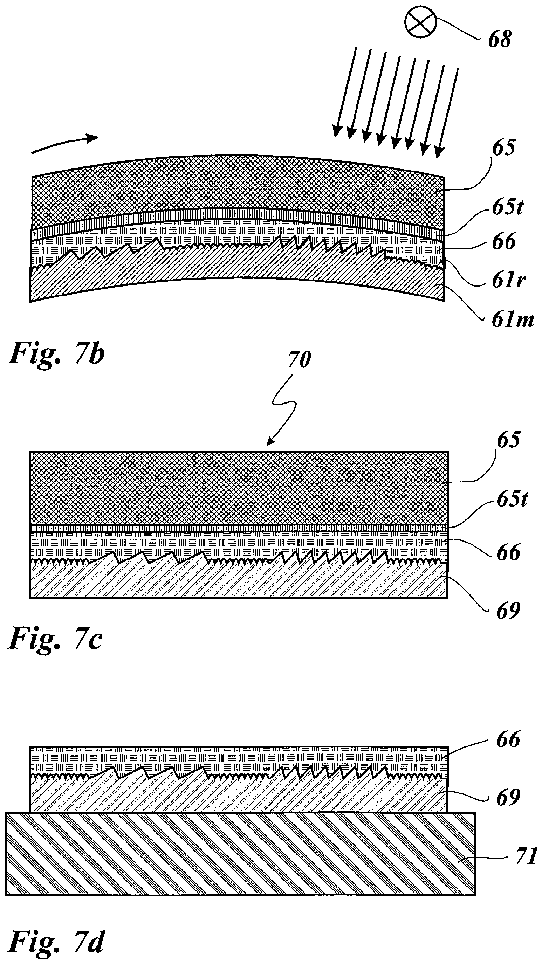

Die Trägerfolie 65 umschlingt den Replikationszylinder 61 in den in Fig. 6a und 7a, b dargestellten Ausführungsbeispielen um 180°. Auf die zum Oberflächenrelief-Master 61m weisende Innenseite der Trägerfolie 65 ist stromabwärts vor dem Replikationszylinder 61 mit Hilfe einer rotierenden Druckwalze 64a eine viskose Photopolymerschicht 66 aufgedruckt. Es kann vorgesehen sein, eine leichtflüssige Photopolymerschicht beim Drucken oder kurz danach mittels UV-Licht vorzuhärten, so daß die für die weitere Verarbeitung optimale Viskosität eingestellt ist.

Zur Belichtung der Photopolymerschicht 66 ist ein Laser 67 vorgesehen, der einen unter einem Winkel von 14° auf den Oberflächenrelief-Master 61m gerichteten Laserstrahl 67s aussendet. Dieser Winkel kann beispielsweise durch Versuche optimiert sein. Er ist unter anderem abhängig von der Flankenneigung der Blazegitter 63a und 63b. Durch Reflexion und Beugung an den Blazegittern 63a und 63b (siehe Fig. 6b) wird in der Photopolymerschicht 66 ein Volumenhologramm ausgebildet, das von dem UV-Licht einer stromaufwärts hinter dem Laser 67 angeordneten UV-Lampe 68 durch Aushärtung der Photopolymerschicht 66 fixiert wird (siehe auch Fig. 7b).

Zwischen dem Laser 67 und dem Replikationszylinder 61 ist eine Zylinderlinse 67z vorgesehen, welche den Laserstrahl 67s bündelt und auf die Oberfläche des Oberflächenrelief-Masters 61m richtet. An dieser Stelle kann aber auch ein eindimensionaler Scanner oder eine zweidimensionale Maske vorgesehen sein, beispielsweise ein Flüssigkristall-Modulator. Es kann sich also auch um einen Verschluß oder einen Modulator handeln, der den Laserstrahl an- und ausschaltet, zweckmäßigerweise im Register mit dem Motiv des Hologramms.

Der Modulator kann beispielsweise als elektrooptischer oder als akustooptischer Modulator ausgeführt sein. Bei dem Laser 67 handelt es sich um einen Laser mit mehreren Wellenlängen bzw. um mehrere monochromatische Laser. Beispielsweise kann vorgesehen sein, daß der Master in einigen Bereichen mit einem roten Laserstrahl beleuchtet wird und in anderen Bereichen mit einem grünen Laserstrahl beleuchtet wird. In einem solchen Ausführungsfall ist der Aufwand für Optik und Modulator höher als bei einem monochromatischen Laser.

Stromabwärts hinter dem Replikationszylinder 61 ist vor der Aufwickelrolle 65a eine rotierende Druckwalze 64b angeordnet, die auf die der Trägerfolie 65 abgewandte Seite der ausgehärteten Photopolymerschicht 66 eine Kleberschicht 69 aufdruckt.

Nunmehr ist aus der Trägerfolie 65, der ausgehärteteten Photopolymerschicht 66 und der Kleberschicht 69 ein Mehrschichtkörper 70 gebildet, der anschließend auf die Aufwickelrolle 65a gewickelt wird.

Fig. 7c zeigt einen für die weitere Verarbeitung fertiggestellten Mehrschichtkörper 70', der sich von dem vorstehend beschriebenen Mehrschichtkörper 70 dadurch unterscheidet, daß zwischen der Trägerfolie 65 und der Photopolymerschicht 66 eine Trennschicht 65t angeordnet ist.

Fig. 7d zeigt nun die von der Trägerfolie abgezogene Photopolymerschicht 66, die mittels der Kleberschicht 69 auf ein Trägersubstrat 72 aufgebracht ist. Bei dem Trägersubstrat 72 kann es sich beispielsweise um eine Banknote oder eine ID-Card handeln, d.h. um ein Sicherheitsdokument, dessen Fälschungssicherheit durch das in der Photopolymerschicht 66 abgeformte Volumenhologramm beträchtlich verbessert ist.

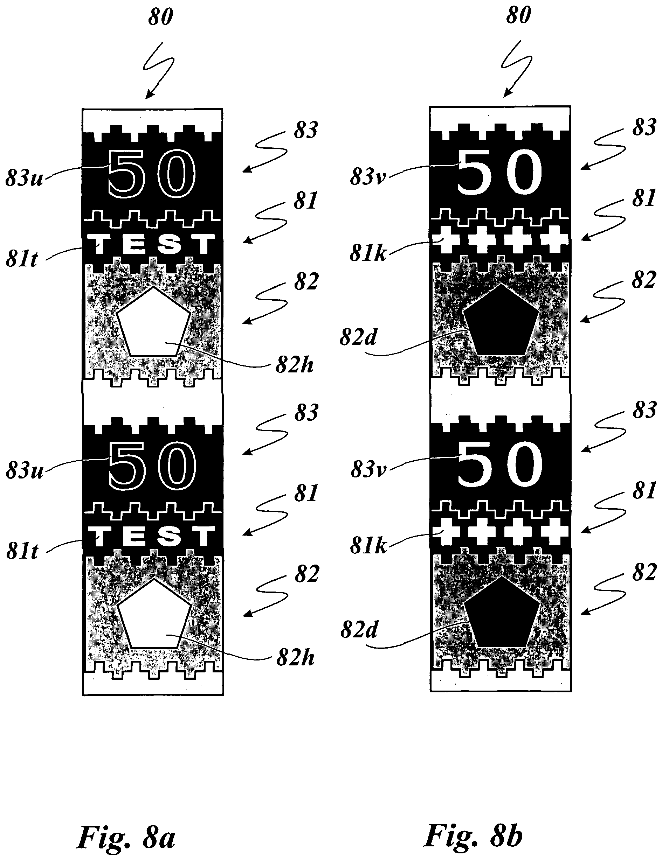

Die Fig. 8a und 8b zeigen nun ein streifenförmiges Sicherheitselement 80 in zwei vergrößerten Ansichten (im Maßstab 2 : 1), die durch das Kippen des Sicherheitselements 80 um eine horizontale Achse gebildet sind. Das Sicherheitselement 80 weist folgende Sicherheitsmerkmale auf:
- Ein Flip-Bild 81, gebildet aus einem ersten Teilbild 81t, das einen Text wiedergibt, und einem zweiten Teilbild 81k, das eine Reihe von Kreuzen wiedergibt. Die beiden Teilbilder 81t und 81k sind streifenförmig gerastert und ineinander verschachtelt (siehe dazu weiter oben auch das Beispiel in Fig. 1a).
- Ein Logo 82, das in Fig. 8a als ein helles Logo 82h und in Fig. 8b als ein komplementäres dunkles Logo 82d erscheint. Das helle Logo 82h und das dunkle Logo 82d sind, wie vorstehend beschrieben, streifenförmig gerastert und ineinander verschachtelt.
   Um diesen Effekt zu erzielen, kann auch vorgesehen sein, daß eine erste Oberflächenstruktur das Logo 82 bildet und eine zweite Oberflächenstruktur die Bereiche außerhalb des Logos bildet. In der in Fig. 8a dargestellten ersten Betrachtungsposition erscheint in diesem Ausführungsbeispiel das Logo 82 als helles Logo 82h und die Bereiche außerhalb des Logos 82 erscheinen dunkel. In der in Fig. 8b dargestellten zweiten Betrachtungsposition erscheint das Logo 82 als dunkles Logo 82d und die Bereiche außerhalb des Logos 82 erscheinen hell. Rastern ist also in diesem Beispiel nicht nötig.
- Eine Wertangabe 83, die in Fig. 8a als ein Umriß 83u und in Fig. 8b als ein Vollbild 83v erscheinen. Die beiden Teilbilder 83u und 83v der Wertangabe 83 sind ohne Rasterung ausgebildet, wobei der Umriß 83u das Vollbild 83v umgibt.

## Patentansprüche

1. Verfahren zur Herstellung eines Mehrschichtkörpers, der ein Volumenhologramm mit mindestens zwei unterschiedlichen Bildinformationen aufweist, wobei eine photosensitive Schicht (6, 36, 46, 56) des Mehrschichtkörpers unmittelbar oder unter Zwischenschaltung eines transparenten optischen Mediums in Kontakt mit der Vorderseite eines Masters gebracht wird, in den miteinander verschachtelte Bereiche mit mindestens zwei unterschiedlichen Oberflächenstrukturen (30a, 30b, 40a, 40b, 50a, 50b) abgeformt sind, welche die mindestens zwei unterschiedlichen Bildinformationen beinhalten, wobei eine der Oberflächenstrukturen eine asymmetrische Reliefstruktur oder eine Kinoform-Struktur aufweist und die Oberflächenstrukturen des Masters, die keine Bildinformation beinhalten, als Mottenaugen-Struktur und/oder als Spiegel und/oder als Mattstruktur und/oder als Streugitter ausgebildet sind; wobei die photosensitive Schicht (6, 36, 46, 56) und der Master mit einem kohärenten Lichtstrahl (37, 47, 57) belichtet werden; wobei das auf diese Weise in die photosensitive Schicht (6, 36, 46, 56) eingebrachte Volumenhologramm durch Aushärten der photosensitiven Schicht fixiert wird; wobei der Mehrschichtkörper in einem Rolle-zu-Rolle-Verfahren hergestellt wird, indem die photosensitive Schicht (66) über einen Replikationszylinder (61) geführt wird, auf dessen Mantelfläche der Master (61m) angeordnet ist, wobei die photosensitive Schicht (66) mit dem kohärenten Lichtstrahl belichtet wird, und wobei die photosensitive Schicht (6, 36, 46, 56) und der Master durch kohärente Lichtstrahlen (37, 47, 57) unterschiedlicher Wellenlänge und/oder unterschiedlicher Einfallsrichtung belichtet werden.

2. Verfahren nach Anspruch 1,
**dadurch gekennzeichnet,**
**daß** die mindestens eine andere Oberflächenstruktur eine asymmetrische Reliefstruktur oder eine symmetrische Reliefstruktur oder eine Reliefstruktur mit variierender Periode oder eine Zufalls-Reliefstruktur oder eine Pseudo-Zufalls-Reliefstruktur aufweist.

3. Verfahren nach Anspruch 1 oder 2,
**dadurch gekennzeichnet,**
**daß** auf die Vorderseite des Masters eine transparente Ablöseschicht (35, 45, 55) aufgebracht wird, deren Brechzahl gleich oder annähernd gleich der Brechzahl der photosensitiven Schicht (6, 36, 46, 56) ist, und daß sodann auf die Ablöseschicht (35, 45, 55) die photosensitive Schicht (6, 36, 46, 56) aufgebracht wird.

4. Verfahren nach Anspruch 3,
**dadurch gekennzeichnet,**
**daß** der Master von der belichteten photosensitiven Schicht (6e, 36e, 46e, 56e) abgelöst wird.

5. Verfahren nach einem der vorhergehenden Ansprüche,
**dadurch gekennzeichnet,**
**daß** die photosensitive Schicht (6, 36, 46, 56) in einer Stärke von 5 µm bis 20 µm verwendet wird.

6. Verfahren nach Anspruch 1 oder 2,
**dadurch gekennzeichnet,**
**daß** die mindestens zwei Oberflächenstrukturen als asymmetrische Oberflächenstrukturen ausgebildet sind, wobei die mindestens zwei asymmetrischen Oberflächenstrukturen (30a, 30b, 40a, 40b, 50a, 50b) mit einer unterschiedlichen Reliefstruktur und/oder einem unterschiedlichen k-Vektor ausgebildet sind.

7. Verfahren nach Anspruch 6,
**dadurch gekennzeichnet,**
**daß** die k-Vektoren der asymmetrischen Oberflächenstrukturen (30a, 30b, 40a, 40b, 50a, 50b) um 180° zueinander gedreht sind.

8. Verfahren nach Anspruch 6,
**dadurch gekennzeichnet,**
**daß** es sich bei den asymmetrischen Oberflächenstrukturen (30a, 30b, 40a, 40b, 50a, 50b) um Blazegitter handelt.

9. Verfahren nach Anspruch 8,
**dadurch gekennzeichnet,**
**daß** das Blazegitter eine Spatialfrequenz von 100 Linien/mm bis 150 Linien/mm aufweist.

10. Verfahren nach Anspruch 8 oder 9,
**dadurch gekennzeichnet,**
**daß** das Blazegitter eine Gittertiefe von 1 bis 2 µm aufweist.

11. Verfahren nach einem der Ansprüche 6 bis 10,
**dadurch gekennzeichnet, daß** die Bereiche mit den mindestens zwei Bildinformationen in einem Raster mit einer Rasterweite von 20 µm bis 50 µm angeordnet sind.

12. Sicherheitselement mit einer transparenten Schicht mit nichthomogener Brechzahl, in welcher die Knoten der Braggschen Ebenen eines Volumenhologramms durch Brechzahlvariation gebildet sind, wobei das Volumenhologramm mindestens zwei unterschiedliche Bildinformationen als holografisches Abbild von mindestens zwei miteinander verschachtelten unterschiedlichen Oberflächenstrukturen beinhaltet, wobei zu dessen Herstellung mittels optischer Kontaktkopie eine photosensitive Schicht und ein Master mit den Oberflächenstrukturen durch kohärente Lichtstrahlen unterschiedlicher Wellenlänge und/oder unterschiedlicher Einfallsrichtung belichtet wurden, wobei eine der Oberflächenstrukturen eine asymmetrische Reliefstruktur oder eine Kinoform-Struktur aufweist und die Oberflächenstrukturen, die keine Bildinformation beinhalten, als Mottenaugen-Struktur und/oder als Spiegel und/oder als Mattstruktur und/oder als Streugitter ausgebildet sind.

## Claims

1. Method for producing a multilayer body that has a volume hologram having at least two different pieces of image information, wherein a photosensitive layer (6, 36, 46, 56) of the multilayer body is brought into contact directly or by the interposition of a transparent optical medium with the front side of a master, into which regions interlaced with one another having at least two different surface structures (30a, 30b, 40a, 40b, 50a, 50b) are moulded, which include the at least two different pieces of image information, wherein one of the surface structures has an asymmetrical relief structure or a Kinoform structure and the surface structures of the master that do not include any image information are formed as a moth-eye structure and/or as a mirror and/or as a matt structure and/or as a diffraction grating; wherein the photosensitive layer (6, 36, 46, 56) and the master are exposed by a coherent light beam (37, 47, 57); wherein the volume hologram introduced into the photosensitive layer (6, 36, 46, 56) in this manner is fixed by curing the photosensitive layer; wherein the multilayer body is produced in a roll-to-roll method by the photosensitive layer (66) being guided over a replication cylinder (61), the master (61m) being arranged on the outer surface thereof, wherein the photosensitive layer (66) is exposed by the coherent light beam, and wherein the photosensitive layer (6, 36, 46, 56) and the master are exposed by means of coherent light beams (37, 47, 57) of different wavelengths and/or different incidence directions.

2. Method according to claim 1,
**characterised in that**
the at least one other surface structure has an asymmetrical relief structure or a symmetrical relief structure or a relief structure having a varying period or a random relief structure or a pseudo-random relief structure.

3. Method according to claim 1 or 2,
**characterised in that**
a transparent detachment layer (35, 45, 55) is applied to the front side of the master, the refractive index of which is equal or virtually equal to the refractive index of the photosensitive layer (6, 36, 46, 56), and then the photosensitive layer (6, 36, 46, 56) is applied to the detachment layer (35, 45, 55).

4. Method according to claim 3,
**characterised in that**
the master is detached from the exposed photosensitive layer (6e, 36e, 46e, 56e).

5. Method according to one of the preceding claims,
**characterised in that**
the photosensitive layer (6, 36, 46, 56) is used in a thickness of from 5 µm to 20 µm.

6. Method according to claim 1 or 2,
**characterised in that**
the at least two surface structures are formed as asymmetrical surface structures, wherein the at least two asymmetrical surface structures (30a, 30b, 40a, 40b, 50a, 50b) are formed with a different relief structure and/or a different k-vector.

7. Method according to claim 6,
**characterised in that**
the k-vectors of the asymmetrical surface structures (30a, 30b, 40a, 40b, 50a, 50b) are rotated by 180° relative to one another.

8. Method according to claim 6,
**characterised in that**
the asymmetrical surface structures (30a, 30b, 40a, 40b, 50a, 50b) are blazed gratings.

9. Method according to claim 8,
**characterised in that**
the blazed grating has a spatial frequency of from 100 lines/mm to 150 lines/mm.

10. Method according to claim 8 or 9,
**characterised in that**
the blazed grating has a grating depth of from 1 to 2 µm.

11. Method according to one of claims 6 to 10,
**characterised in that**
the regions having the at least two pieces of image information are arranged in a grid having a grid width of from 20 µm to 50 µm.

12. Security element having a transparent layer having a non-homogeneous refractive index, in which the nodes of the Bragg planes of a volume hologram are formed by refractive index variation, wherein the volume hologram includes at least two different pieces of image information as a holographic depiction of at least two different surface structures that interlace with one another, wherein, for the production thereof by means of an optical contact copy, a photosensitive layer and a master having the surface structures were exposed by coherent light beams of different wavelengths and/or different incidence directions, wherein one of the surface structures has an asymmetrical relief structure or a Kinoform structure and the surface structures which do not include any image information are formed as a moth-eye structure and/or as a mirror and/or as a matt structure and/or as a diffraction grating.

## Revendications

1. Procédé de fabrication d'un corps multicouche, qui présente un hologramme volumique avec au moins deux informations d'image différentes, dans lequel une couche photosensible (6, 36, 46, 56) du corps multicouche est mise en contact avec la face avant d'une matrice directement ou avec interposition d'un support optique transparent, dans lequel des zones imbriquées l'une dans l'autre sont moulées avec au moins deux structures de surface différentes (30a, 30b, 40a, 40b, 50a, 50b), lesquelles contiennent les au moins deux informations d'image différentes, dans lequel une des structures de surface présente une structure en relief asymétrique ou une structure kinoforme et les structures de surface de la matrice, qui ne contiennent aucune information d'image, sont réalisées en tant que structure en oeil de mite et/ou en tant que miroir et/ou en tant que structure mate et/ou en tant que réseau de diffusion ; dans lequel la couche photosensible (6, 36, 46, 56) et la matrice sont éclairées avec un faisceau lumineux cohérent (37, 47, 57) ; dans lequel l'hologramme volumique introduit de cette manière dans la couche photosensible (6, 36, 46, 56) est fixé par durcissement de la couche photosensible ; dans lequel le corps multicouche est fabriqué selon un procédé rouleau à rouleau, en guidant la couche photosensible (66) au-dessus d'un cylindre de réplication (61), sur la surface enveloppe duquel la matrice (61m) est agencée, dans lequel la couche photosensible (66) est éclairée avec un faisceau lumineux cohérent, et dans lequel la couche photosensible (6, 36, 46, 56) et la matrice sont éclairées par des faisceaux lumineux cohérents (37, 47, 57) de longueur d'onde différente et/ou de direction d'incidence différente.

2. Procédé selon la revendication 1,
**caractérisé en ce**
**que** l'au moins une autre structure de surface présente une structure en relief asymétrique ou une structure en relief symétrique ou une structure en relief avec période variable ou une structure en relief aléatoire ou une structure en relief pseudo-aléatoire.

3. Procédé selon la revendication 1 ou 2, **caractérisé en ce**
**que** sur la face avant de la matrice une couche de détachement transparente (35, 45, 55) est appliquée, dont l'indice de réfraction est égal ou approximativement égal à l'indice de réfraction de la couche photosensible (6, 36, 46, 56), et qu'ensuite la couche photosensible (6, 36, 46, 56) est appliquée sur la couche de détachement (35, 45, 55).

4. Procédé selon la revendication 3,
**caractérisé en ce**
**que** la matrice est détachée de la couche photosensible éclairée (6e, 36e, 46e, 56e).

5. Procédé selon l'une quelconque des revendications précédentes,
**caractérisé en ce**
**que** la couche photosensible (6, 36, 46, 56) d'une épaisseur de 5 µm à 20 µm est utilisée.

6. Procédé selon la revendication 1 ou 2, **caractérisé en ce**
**que** les au moins deux structures de surface sont réalisées en tant que structures de surface asymétriques, dans lequel les au moins deux structures de surface asymétriques (30a, 30b, 40a, 40b, 50a, 50b) sont réalisées avec une structure en relief différente et/ou un vecteur k différent.

7. Procédé selon la revendication 6,
**caractérisé en ce**
**que** les vecteurs k des structures de surface asymétriques (30a, 30b, 40a, 40b, 50a, 50b) sont tournés l'un par rapport à l'autre de 180°.

8. Procédé selon la revendication 6,
**caractérisé en ce**
**que** les structures de surface asymétriques (30a, 30b, 40a, 40b, 50a, 50b) sont des réseaux blazés.

9. Procédé selon la revendication 8,
**caractérisé en ce**
**que** le réseau blazé présente une fréquence spatiale de 100 lignes/mm à 150 lignes/mm.

10. Procédé selon la revendication 8 ou 9, **caractérisé en ce**
**que** le réseau blazé présente une profondeur de réseau de 1 à 2 µm.

11. Procédé selon l'une quelconque des revendications 6 à 10,
**caractérisé en ce**
**que** les zones avec les au moins deux informations d'image sont agencées dans une trame avec une largeur de trame de 20 µm à 50 µm.

12. Élément de sécurité avec une couche transparente avec indice de réfraction non homogène, dans laquelle les noeuds des plans de Bragg d'un hologramme volumique sont formés par variation de l'indice de réfraction, dans lequel l'hologramme volumique contient au moins deux informations d'image différentes en tant que représentation holographique d'au moins deux structures de surface différentes imbriquées l'une dans l'autre, dans lequel pour sa fabrication une couche photosensible et une matrice avec les structures de surface ont été éclairées par des faisceaux lumineux cohérents de longueur d'onde différente et/ou de direction d'incidence différente au moyen d'une copie de contact optique, dans lequel une des structures de surface présente une structure en relief asymétrique ou une structure kinoforme et les structures de surface, qui ne contiennent aucune information d'image, sont réalisées en tant que structure en oeil de mite et/ou en tant que miroir et/ou en tant que structure mate et/ou en tant que réseau de diffusion.
